Europäisches Patentamt

European Patent Office

Office européen des brevets

(11) Veröffentlichungsnummer: **0 417 763 A2**

## (12) EUROPÄISCHE PATENTANMELDUNG

(21) Anmeldenummer: 90117561.2

(51) Int. Cl.⁵: **G01B 17/00**

(22) Anmeldetag: **12.09.90**

(30) Priorität: **12.09.89 DE 3930424**

(43) Veröffentlichungstag der Anmeldung:
**20.03.91 Patentblatt 91/12**

(84) Benannte Vertragsstaaten:
**AT BE CH DE DK ES FR GB GR IT LI LU NL SE**

(71) Anmelder: **FABRIQUES DE TABAC REUNIES S.A.**
**Quai Jeanrenaud 3 P.O. Box 11**
**CH-2003 Neuchâtel-Serrières(CH)**

(72) Erfinder: **Lochner, Peter**
**Klematisstrasse 5**
**W-8038 Gröbenzell(DE)**

(74) Vertreter: **Abitz, Walter, Dr.-Ing. et al**
**Abitz, Morf, Gritschneder, Freiherr von**
**Wittgenstein Postfach 86 01 09**
**W-8000 München 86(DE)**

(54) Verfahren zur Überprüfung des Bestehens einer Rohrleitungsverbindung zwischen zwei Endpunkten.

(57) Das Bestehen von Rohrleitungsverbindungen kann durch die Übertragung von akustischen Signalen von einem Sender zu einem akustischen Sensor innerhalb der Rohre überprüft werden. Dieses Verfahren findet besonders bei der Herstellung von Zigaretten Anwendung.

Fig. 3

## VERFAHREN ZUR ÜBERPRÜFUNG DES BESTEHENS EINER ROHRLEITUNGSVERBINDUNG ZWISCHEN ZWEI ENDPUNKTEN

Die Erfindung betrifft ein Verfahren zur Überprüfung des Bestehens einer Rohrleitungsverbindung zwischen zwei Endpunkten.

Jede Zigarettensorte besteht aus einer speziellen Tabakmischung, die aus einer Tabakverteilungsstelle (Beschicker) durch Rohrleitungen mittels Unterdruck zu den Zigarettenherstellungsmaschinen (Strangmaschinen) überführt wird. In Produktionsstätten, in in denen gleichzeitig mehrere Strangmaschinen in Betrieb sind, existiert daher eine Vielzahl von Rohrleitungen. Da mitunter mehrmals täglich in den Strangmaschinen neue Tabakgemische für die Herstellung der Zigaretten benötigt werden, müssen die Rohrleitungen dementsprechend häufig umgesteckt werden, was wegen der Unübersichtlichkeit der vielen Rohrleitungen leicht zu falschen Rohrverbindungen führt. Die Unübersichtlichkeit der Rohr leitungen wird noch dadurch erhöht, daß Strangmaschinen und Beschikker üblicherweise in verschiedenen Räumen oder Stockwerken untergebracht sind und daher relativ große Wegstrecken von teilweise über 100 m zwischen ihnen existieren.

Um falsche Zuordnungen zwischen Beschicker und Strangmaschine zu vermeiden, die zu Fehlproduktionen führen, kann die Rohrleitung visuell kontrolliert werden. Dies bedingt jedoch einen relativ hohen Arbeitsaufwand und ist zudem wegen der Unübersichtlichkeit der Rohrleitungen keine absolut sichere Kontrollmethode. Eine weitere Möglichkeit, die Rohrverbindungen zu überprüfen, ist das Anlegen eines Überdrucks. Hierzu müssen jedoch am Rohrende Verschlußklappen angebracht werden, die bei der späteren Tabakförderung einen Strömungswiderstand dar stellen und zu einer Zerstörung des Tabaks führen. Die Rohrverbindung kann auch durch einen angelegten Unterdruck überprüft werden. Es hat sich jedoch gezeigt, daß bei dieser Methode die Meßinstrumente im Laufe der Zeit durch sich absetzenden Tabakstaub blockiert und damit funktionsuntüchtig gemacht werden. Außerdem würde durch das Anlegen von Vakuum unter Umständen bereits falscher Tabak gefördert.

Aufgabe der vorliegenden Erfindung ist es daher, ein einfaches und praktikables Verfahren zur Verfügung zu stellen zur Überwachung des Bestehens von Rohrleitungsverbindungen, d.h. zur Feststellung, ob zwischen zwei Endpunkten eine Rohrverbindung besteht.

Diese Aufgabe wird durch die akustische Rohrleitungsüberwachung entsprechend dem kennzeichnenden Teil des Anspruchs 1 gelöst.

Das Rohrleitungsüberwachungsverfahren der vorliegenden Anmeldung besitzt mehrere Vorteile.

Es ist mit relativ geringem Arbeitsaufwand durchführbar und stellt eine sichere Überwachungsmethode dar. Die Überwachung des Bestehens der Rohrverbindung kann vor Inbetriebnahme geschehen oder auch während des Betriebs durchgeführt werden. Sender und akustischer Sensor (Empfänger) können über ein speicherprogrammierbares Steuergerät gesteuert werden, so daß die Kontrolle in regelmäßigen Abständen automatisch durchgeführt werden kann. Sender und Empfänger können außerhalb des Rohr inneren mit direktem Zugang zu dem Rohr angebracht werden, so daß kein Strömungswiderstand besteht und die Qualität des Tabaks nicht nachteilig beeinflußt wird.

Es hat sich als zweckmäßig erwiesen, die Schallstärke des Senders so einzustellen, daß das empfangene Signal um mindestens 10 dB, vorzugsweise 15 dB über dem Grundschallpegel liegt, um eine eindeutige Unterscheidung des Meßsignals von dem Grundschallpegel zu ermöglichen.

Ebenso sind Frequenzen von weniger als 500 Hz, vorzugsweise weniger als 600 Hz, für die Durchführung des Verfahrens ungeeignet, wenn der Umgebungsgeräuschpegel sehr hoch ist. Der Geräuschpegel aus Umwelteinflüssen (beispielsweise Produktion) im Frequenzbereich von ca. 600-1400 Hz ist relativ kontinuierlich und niedrig, so daß bei selektiver, energiereicher Beschallung in diesem Frequenzbereich mit großen Störpegelabständen zwischen Grundgeräusch und Nutzsignalpegel gerechnet werden kann.

Vorzugsweise wird der Empfänger nit einem Filter gekoppelt, der nur Eür den vom Sender ausgestrahlten Frequenzbereich durchlässig ist und damit störende Einflüsse der Umgebung weitgehend ausschließt.

Die Messung des empfangenen Signals wird dadurch erleichtert, daß vom Sender Signale in einem sehr engen Frequenzbereich ausgestrahlt werden.

Das Überwachungsverfahren der vorliegenden Anmeldung ist im Prinzip für Rohre mit beliebigen Innendurchmessern anwendbar, beispielsweise für Rohre mit einem Innendurchmesser von 5 bis 35 cm. Weiterhin können die Rohre beliebigen Querschnitt haben, beispielsweise einen runden, ovalen, rechteckigen, quadratischen oder polygonförmigen Querschnitt.

Die Schallstärke des von den Lautsprechern auszustrahlenden Signals hängt von mehreren Faktoren ab. Einerseits nimmt die Schallstärke in einem unbeschickten, also nur mit Luft gefüllten Rohr durch Dämpfung langsam ab. Bei einem Rohr mit einem Innendurchmesser von 12 cm beträgt die Abnahme der Schallstärke 0,3 dB pro Meter Rohr. Für ein mit Tabak beschicktes Rohr betrugt dieser Wert ca. 0,5 dB pro Meter Rohr. Weiterhin sind selbstverständlich die Umgebungsgeräusche zu berücksichtigen. Aus dem Umgebungsgeräuschpegel und der zu kontrollierenden Rohrlänge ergibt sich die erforderliche Schallstärke des Senders. Um das am Empfänger ankommende Signal eindeutig von dem Grundschallpegel unterscheiden zu können, wird ein Rauschabstand von 10, vorzugsweise 15 dB, benötigt.

Zum Betrieb einer Strangmaschine muß eine Rohrleitung (Rohrinnendurchmesser beispielsweise 120 mm) fest mit einem Stutzen am Beschicker verbunden sein. Die Rohrleitung besteht beispielsweise aus geraden Rohrstücken unterschiedlicher Länge (Material beipielsweise AlMg₃) und Bogenstücken (beispielsweise aus der Kesselblech-Stahlsorte St 37) mit Umlenkung von bis zu 90°, die an den Stoßstellen mit Muffen aus Kunststoff (beispielsweise Celluloseacetobutyrat - CAB) verbunden sind. Die Verbindung der Stoß stellen kann aber auch auf jede andere bekannte Weise erfolgen, also beispielsweise durch Flansche, Verschweißen oder Klemmen. Aus qualitätstechnischen Gründen sollen die Stöße der Rohre oder Bogen einen maximalen Abstand von ca. 1 mm aufweisen und keine Querschnittsveränderungen oder Einbauten im Rohr vorhanden sein. Typische Distanzen zwischen Stutzen am Beschicker bis zum Maker liegen - je nach Standort - zwischen 10 und 130 m.

Die Rohrverbindung ist am Beschicker nach unten geöffnet und wird nur während des Beschikkungsvorganges durch den abgesaugten Tabak teilweise verdeckt. Für die Messung können die Rohrenden geöffnet oder geschlossen sein.

An der Strangmaschine endet das Rohr in einer Schleuse, in der der geförderte Tabak abgefangen wird. Die Schleuse ist mit einem Vakuum-Rohrsystem über ein Klappenventil zu verbinden.

Die Rohrverbindungen können beispielsweise zwischen 40 Strangmaschinen und auf der Gegenseite 20 Beschickern hergestellt werden. Jeder Beschicker verfügt beispielsweise über bis zu 16 Anschlußstutzen, d.h. es können beispielsweise bis zu 16 Strangmaschinen mit einem Beschicker verbunden werden. Grundsätzlich kann jede Strangmaschine mit jedem Beschicker verbunden werden.

Die Steuerung für den Bedienungsvorgang kann durch eine SPS (speicherprogrammierbares Steuergerät - Simatic 150 U) erfolgen, die von der Strangmaschine ein Signal bekommt (Handeinstellung oder Automatik), von welchem Beschicker der Tabak abgesaugt werden soll. Dabei steuert die SPS den Beschickungsvorgang und den Ablauf des Tabakflusses im Beschicker.

Das Verfahren ist wie beschrieben für pneumatischen Feststofftransport ebenso wie für reine Gase und für Flüssigkeiten anwendbar.

Ein Ausführungsbeispiel der Erfindung ist in der Zeichnung dargestellt und wird im Folgenden näher beschrieben.

Es zeigen
Figur 1 die akustische Übertragungsfunktion einer Rohrleitung,
Figur 2 die Ergebnisse eines Versuchs mit einer Senderfrequenz von 1000 Hz desselben Rohres,
Figur 3 ein Schaltbild für die Automatisierung des anmeldungsgemäßen Verfahrens und
Figur 4 ein beispiel für die Montage eines Lautsprechers.

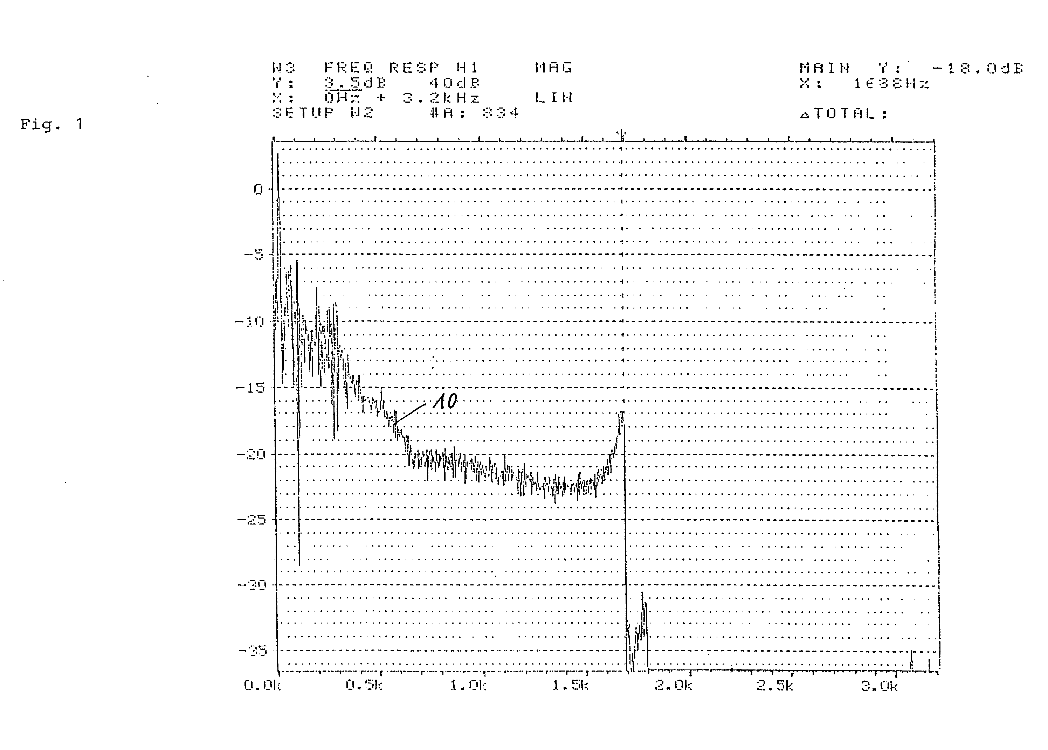

Fig. 1 gibt die für ein 40 m-Rohr mit einem Innendurchmesser von 10,4 cm ermittelte Übertragungsfunktion 10 in Abhängigkeit von der Frequenz wieder. Daraus wird ersichtlich, daß bei Frequenzen von kleiner 500 Hz, vorzugsweise 600 Hz, eine Intensitätsabnahme des akustischen Signals nicht stattfindet, da in diesen Frequenzbereich ein beständiger Einfluß der Umgebung vorhanden ist. Bei Frequenzen von größer 1680 Hz ist eine Messung ebenfalls nicht mehr möglich, da keine Schallübertragung mehr eintritt.

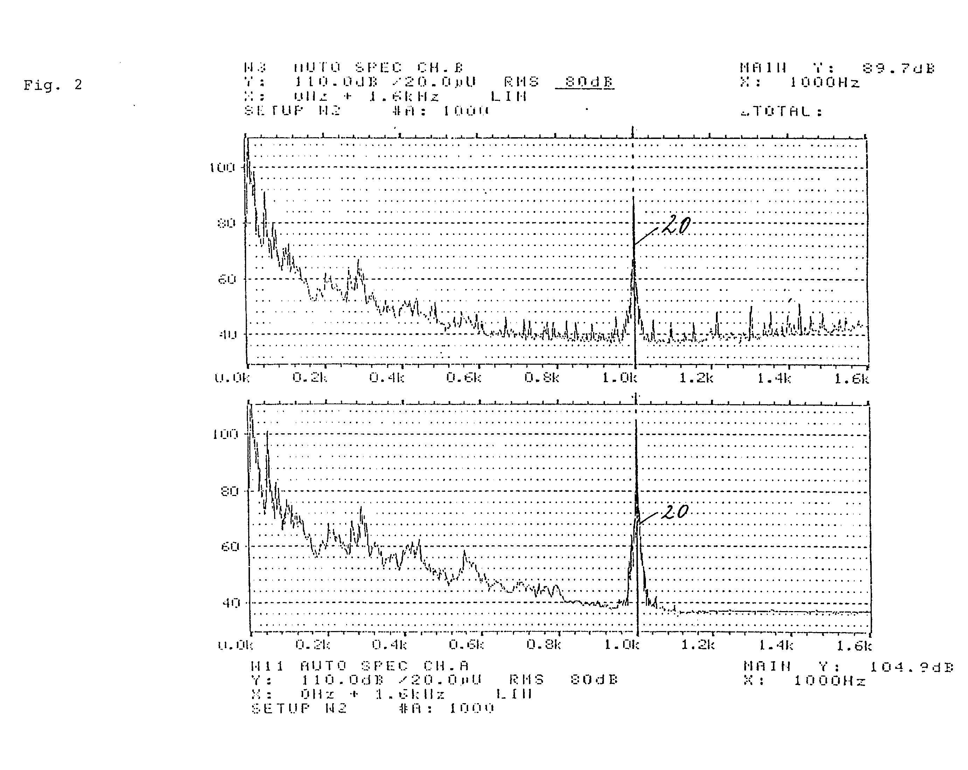

Fig. 2 zeigt die mit einem mit Tabak beschickten Rohr von einer Länge von 40 m und einem Innendurchmesser von 12 cm gewonnenen Ergebnisse. Aus der Figur ist ersichtlich, daß die Schallstärke des in einem engen Frequenzbereich um 1000 Hz eingestrahlten Signals 20 vom Sender (am Beschicker, untere Darstellung) von ca. 110 dB zum Empfänger (obere Darstellung) auf ca. 90 dB entsprechend einer Abnahme von ungefähr 0,5 dB/m beschicktes Rohr abgesunken ist.

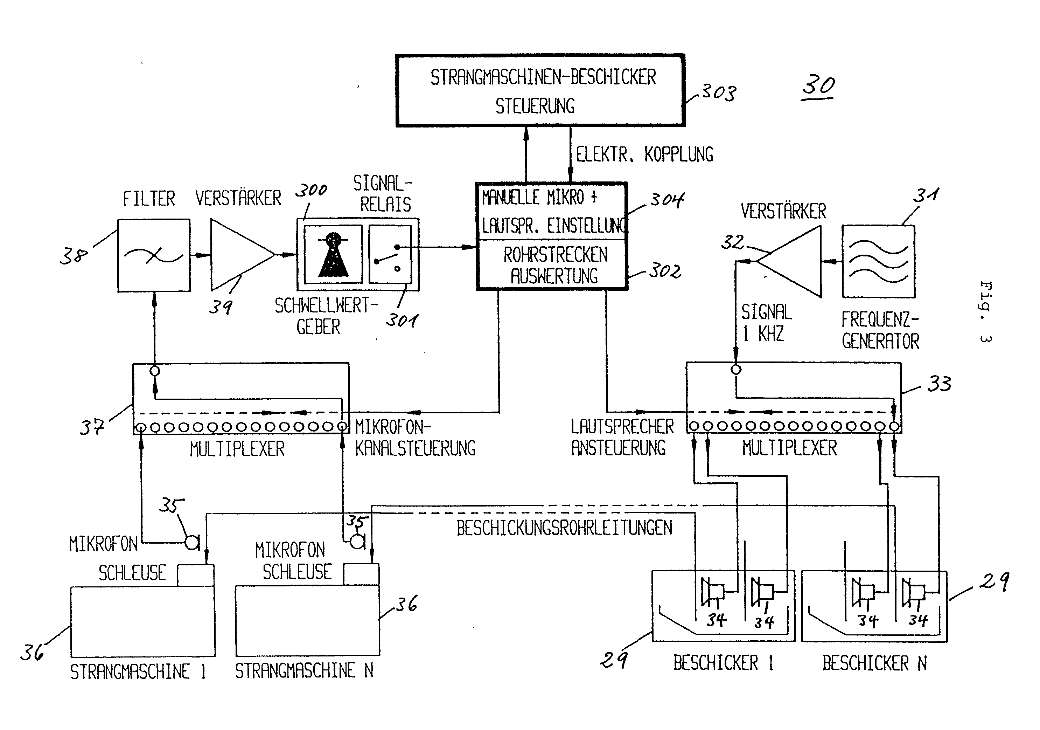

Das erfindungsgemäße Verfahren kann von Hand betrieben werden, aber auch sehr leicht automatisiert werden. Ein typisches Schaltbild 30 für eine Automatisierung zeigt Fig. 3 am Beispiel der Zigarettenherstellung. Ein akustisches Signal wird durch einen Frequenzgenerator 31 erzeugt, durch einen Verstärker 32 verstärkt, durch einen Sender-Multiplexer 33 geführt und von Lautsprechern 34 abgestrahlt, die an Beschickern 29 vorgesehen sind. Bei vorhandener Rohrverbindung wird das Signal von einem akustischen Sensor, z. B. einem Mikrophon 35 an der betreffenden Strangmaschine 36 empfangen und über einen N-Kanal-Mikrophon-Multiplexer 37, ein Filter 38, das vorzugsweise die vom Lautsprecher 34 ausgestrahlte Übertragungsfrequenz von Signalen anderer Frequenz abtrennt, und einen Verstärker 39 an einen Schwellwertgeber 300 weitergeleitet. Der Schwellwertgeber 300 fällt eine Ja/Nein-Entscheidung, je nach dem ob das von dem Mikrophon 35 empfangene Signal einen Schwellwert erreicht oder nicht, und steuert die Beschicker 29 über ein Signalrelais 301, einen Rohrstreckenauswerter 302 und eine Strangmaschinen-Beschicker-Steuerung 303. Eine Automatisierung der Kontrolle für mehrere Rohrstrecken ist durch rechnergesteuertes Ansteuern der jeweiligen Lautsprecher 34 und Mikrophone 35 über Multiplexer und eine Abfrage des Schwellwertgebers 300 möglich. Die Lautsprecher 34 und Mikrophone 35 können über eine manuelle Mikrophon- und Lautsprecher-Steuerung 304 gesteuert werden.

Dabei bedeutet eine Ja-Entscheidung, daß eine durchgängige Rohrverbindung zwischen Sender und Empfänger vorhanden ist. Eine Nein-Entscheidung bedeutet, daß überhaupt keine Rohrverbindung vorhanden ist oder aber keine durchgängige Verbindung eristiert, z.B. weil eine Verstopfung vorliegt, die die akustischen Signale zusätzlich dämpft.

Bei Handbetrieb sind die für den Betrieb notwendigen Funktionen durch eine eigene Fehlererkennung kontinuierlich zu überwachen und Funktion oder Fehl funktionen anzuzeigen bzw. bei Kopplungsbetrieb mit der SPS als Fehlerkontakt abzugreifen. Der modulare Aufbau der Überwachungseinheit 'soll dem Nutzer den Austausch und die Veränderung von Systemkomponenten ermöglichen.

Damit die Zuordnungsüberwachung unter definierten Bedingungen arbeiten kann, ist neben der Kontrolle - Mikrophon bzw. Lautsprecher an der Anlage angekoppelt - auch deren Funktion, sowie bei schmalbandigem Filter zur Nutzsignalanalyse eine Übereinstimmungskontrolle von Filterbereich und Nutzsignal vor zusehen.

Vorzugsweise ist das Filter 38 in der Auswertungseinheit je nach Auswertungsart
a) mit einer Bandbreite von max. 10 Hz auszuführen, wenn ein direkter Vergleich Nutzsignalpegel / Grundgeräuschpegel (in der Bandbreite des Filters) oder
b) mit einer Bandbreite von mag. 60 Hz auszuführen, wenn der Vergleich nur zwischen dem absoluten Nutzsignalpegel (in der Bandbreite des Filters) und einem Schwellwert (fest eingestellt) vorgenommen wird.

Die aus dem Vergleich gewonnene Größe - Nutzsignalpegel größer als Schwellwert bzw. Grundgeräuschpegel - Ja/Nein, ist für den Handbetrieb anzuzeigen oder im Koppelungsbetrieb mit der SPS als Signal abzugreifen.

Für den Betrieb mit der SPS als Master kann ein Mehrkanalparallelbus auf 24 V DC Basis (digital 1/0) aufgebaut werden. Grundsätzlich werden von der SPS die Nummer des Strangmaschinenmikrophons 35 und des Lautsprechers 34 an einem Beschikker 29 inklusive eines Messungsfreigabesignals übergeben. Die Auswertungseinheit gibt ihrerseits Signale für beispielsweise Messungsbereitschaft, Anlage nicht in Ordnung (auch Handbetrieb) und Verbindung zwischen Strangmaschine/Beschikker vorhanden. Für den Manuellbetrieb sollten Einstellmöglichkeiten für Strangmaschinen-Mikrophon und Nummer des Lautsprechers sowie Messungsstart vorhanden sein.

Die für das Rohrüberwachungsverfahren benötigten Sender (Lautsprecher) und Empfänger (Mikrophone) sind kommerziell erhältlich. Als Lautsprecher können beispielsweise Membranlautsprecher (mit Metallmembranen für aggressive Medien) verwendet werden.

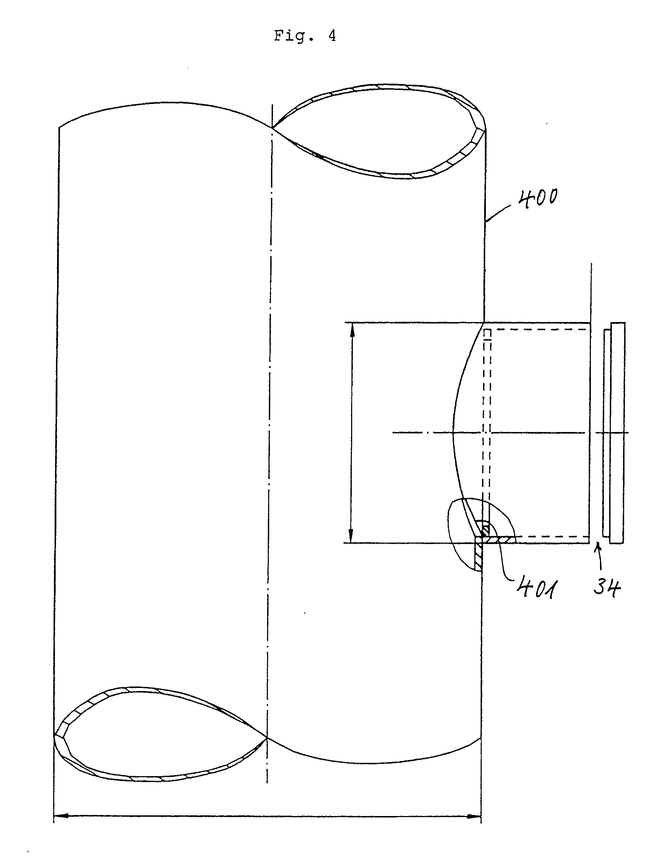

Die Mikrophone 35 und Lautsprecher 34 werden bevorzugt radial an dem Rohr 400 montiert mit einem direkten Zugang (Bohrung 401) zum Rohrinneren (wie es Fig. 4 am Beispiel eines Lautsprechers 34 zeigt). Diese Befestigung der Mikrophone 35 und der Lautsprecher 34 ist bevorzugt, da dadurch keine Einbauten in dem Rohrinneren notwendig sind, die zu einer Zerstörung des Tabaks führen könnten.

Bei der Zigarettenproduktion sollten aus arbeitstechnischen Gründen die Lautsprecher vorzugsweise im Beschicker in einer ähnlichen Form (Stutzen oder Gehäuse), wie in der Figur 4 aufgezeichnet, mit luftdichter Anbindung an die jeweilige Rohrverbindung radial montiert werden. Zu beachten sind die beengten Einbauverhältnisse im Beschicker (Lautsprecher soll nicht außerhalb des Beschickers angebracht sein, Rohr in senkrechter Einbaulage), die mechanische Beanspruchung der Lautsprechereinbauten durch Schwingungen des Beschickerantriebes, die Umgebung mit feinstem Tabakstaub, die begrenzte Verwendung von Kunststoffen und die unbedingte Vermeidung von lösbaren Teilen, die in den Tabak gelangen könnten, sowie An- oder Einbauten, die in das Beschikkungsrohrinnere ragen.

Die Lautsprecher 34 werden bevorzugt nahe am Anfang der Rohrstutzen in den Beschicker 29 angebracht. Bei der Ansaugung des Tabaks aus dem Beschicker kommt es am Anfang der Rohrstutzen zu einer Einschnürung der Tabakströmung, so daß die Belastung der Lautsprecher durch Tabakstaub gering gehalten wird.

Für die bevorzugte Installation des Mikrophons 35 in unmittelbarer Nähe der Strangmaschine radial am Beschickungsrohr sind die bereits beim Lautsprecher angeführten Punkte zu beachten. Das Mikrophon wird im Gegensatz zum Lautsprecher vorzugsweise an einem horizontalen Rohrstück an oberster Stelle huckepack angebracht.

Jeder Lautsprecher und jedem Mikrophon soll in Hinsicht auf Schalldruckpegel und Verstärkung einstellbar sein, so daß bei der Auswertung des Nutzsignalpegels nur ein Schwellwertpegel bzw. eine Pegeldifferenz als Festwert eingestellt werden muß.

Der Nutzsignal-Schalldruckpegel jedes Lautsprechers (beispielsweise im Beschicker) muß bei der Inbetriebnahme so hoch justiert werden können, daß an jedem Mikrophon (beispielsweise direkt an der Strangmaschine) eine Differenz zwischen dem Grundschallpegel und dem Nutzsignalschallpegel nach Durchlaufen des verwendeten Filters von mindestens 10, vorzugsweise 15 dB, meßbar ist. Gewertet wird der Schalldruckpegel unter den üblichen Produktionsbedingungen mit 8 sec. Mitteilungszeit (linear). In Bezug auf Langzeitkonstanz der abgestrahlten Frequenz darf der Lautsprecher nicht aus dem Filterselektierbereich des Mikrophons abdriften oder umgekehrt. Die Schalldruckpegeldifferenz zwischen Nutz- und Grundschalldruckpegel an der Strangmaschine darf 10 dB nicht unterschreiten.

## Ansprüche

1. Verfahren zur Überprüfung des Bestehens einer Rohrleitungsverbindung zwischen zwei Endpunkten, gekennzeichnet dadurch, daß akustische Signale am einen Endpunkt mit einem Sender im Rohr erzeugt werden, am anderen Endpunkt von einem akustischen Sensor in ein elektrisches Signal umgesetzt werden und mit einem Schwellwert verglichen werden, wobei das Überschreiten des Schwellwertes das Bestehen einer Rohrverbindung anzeigt.

2. Verfahren nach Anspruch 1, dadurch gekennzeichnet, daß der Sender von einem Rauschgenerator über einen Verstärker angesteuert wird.

3. Verfahren nach Anspruch 1 oder 2, dadurch gekennzeichnet, daß die akustischen Signale Frequenzen über den Strömungs- und sonstigen Umgebungsgeräuschen und unter einer Obergrenze haben, die sich nach der Formel $f = c/2d$ ergibt, worin $f$ die Frequenz, $c$ die Schallgeschwindigkeit des Stoffes im Rohr (Gas, Fluid) und $d$ der Rohrinnendurchmesser sind.

4. Verfahren nach einem der Ansprüche 1 bis 3, dadurch gekennzeichnet, daß die akustischen Signale ein Sinuston sind.

5. Verfahren nach einem der Ansprüche 1 bis 4, dadurch gekennzeichnet, daß die akustischen Signale während der Zeit der Messung kontinuierlich gesendet werden.

6. Verfahren nach einem der Ansprüche 1 bis 4, dadurch gekennzeichnet, daß die akustischen Signale impulsförmig gesendet werden.

7. Verfahren nach einem der Ansprüche 1 bis 6, dadurch gekennzeichnet, daß die elektrischen Signale nach dem akustischen Sensor verstärkt werden und der Frequenzbereich des Senders herausgefiltert wird.

8. Verfahren nach einem der Ansprüche 1 bis 7, dadurch gekennzeichnet, daß die Überwachung des Schwellwertes kontinuierlich oder ereignisbezogen (Zählen der Schwellwertübertretungen) ausgewertet wird.

9. Verfahren nach einem der Ansprüche 1 bis 8 zur Überprüfung von komplexen Rohrleitungsstreckensystemen, wobei an jedem Rohrleitungsende ein Sender bzw. akustischer Sensor angebracht ist, gekennzeichnet dadurch, daß für die Ansteuerung der Sender ein Mehrfachschalter (Multiplexer) und für die Kontrolle der Sensoren vor dem Schwellwertgeber Multiplexer integriert werden, deren Schaltzustand manuell oder von einer separaten Steuerung einstellbar ist.

Fig. 1

Fig. 2

Fig. 3

**30**

STRANGMASCHINEN-BESCHICKER STEUERUNG — 303

ELEKTR. KOPPLUNG

MANUELLE MIKRO + LAUTSPR. EINSTELLUNG — 304

ROHRSTRECKEN AUSWERTUNG — 302

VERSTÄRKER — 32 — 31

SIGNAL 1 KHZ

FREQUENZ-GENERATOR

MULTIPLEXER — 33

LAUTSPRECHER ANSTEUERUNG

BESCHICKER N — 29 — 34 — 34

BESCHICKER 1 — 34 — 34 — 29

BESCHICKUNGSROHRLEITUNGEN

FILTER — 38

VERSTÄRKER — 39

SCHWELLWERT-GEBER — 300

SIGNAL-RELAIS — 301

MULTIPLEXER — 37

MIKROFON-KANALSTEUERUNG

MIKROFON SCHLEUSE — 35 — 36

STRANGMASCHINE N

MIKROFON SCHLEUSE — 35 — 36

STRANGMASCHINE 1

8

Fig. 4